# EUROPÄISCHE PATENTANMELDUNG

(11) **EP 4 310 375 A1**
(43) Veröffentlichungstag der Anmeldung: **24.01.2024**
(21) Anmeldenummer: 23179323.3
(22) Anmeldetag: 14.06.2023
(51) Int. Cl.: F16K 27/02, F16K 31/04, H02K 5/24

(54) **VENTILEINHEIT UND VERFAHREN ZUR HERSTELLUNG DER VENTILEINHEIT**

(30) Priorität: 20.07.2022 DE 102022118168
(71) Anmelder: Bürkert Werke GmbH & Co. KG, 74653 Ingelfingen (DE)
(72) Erfinder: SPERRLE, Till, 74653 Ingelfingen (DE)
(74) Vertreter: Prinz & Partner mbB

(57) **Zusammenfassung**

Es wird eine Ventileinheit (1) bereitgestellt, die ein Gehäuse (2) mit einem Deckel (3) umfasst. In dem Gehäuse (2) ist ein Ventilantrieb (4) untergebracht, der mit einer Ventilspindel (5) verbunden ist. An einem der Ventilspindel (5) entgegengesetzten Ende des Ventilantriebs (4) ist ein Schließkörper angeordnet. Weiterhin ist zwischen einer dem Schließkörper (11) abgewandten Anlage im Gehäuse (2) und dem Ventilantrieb (4) ein elastisches Element (6) angeordnet, sodass das elastische Element (6) den Ventilantrieb (4) in einem geschlossenen Zustand der Ventileinheit (1) in Richtung des Deckels (3) vorspannt. Durch eine derartige Ausgestaltung der Ventileinheit (1) kann die Unterbringung eine Ventileinheit (1) in einem Gehäuse (2) vereinfacht werden. Weiterhin werden durch die Vorspannung des Ventilantriebs (4) durch das elastische Element (6) die Toleranzen, beispielsweise die Herstellungstoleranzen des Gehäuses (2), ausgeglichen.

## Beschreibung

Die Erfindung betrifft eine Ventileinheit und ein Verfahren zur Herstellung der Ventileinheit.

In herkömmlichen Ventileinheiten ist für den Zweck, den Ventilantrieb in einer definierten Lage zu halten, der Ventilantrieb mithilfe von Schrauben an einem Halter befestigt, der wiederum mit der Fluidik verbunden ist, sprich sich darauf abstützt. Das Gehäuse selbst übernimmt folglich keine lasttragende Funktion und ist nur eine Schutzhaube.

Formschlüssige oder stoffschlüssige Verbindungen zwischen Gehäuse und Deckel, bei denen keine Vorspannkraft aufgebracht werden kann (beispielsweise Rasthaken, Sicherun**gsring, Schweißverbindungen, Verstiftungen,** ...) **haben den** Nachteil, dass Toleranzen zwischen dem Inneren des Gehäuses und dem Ventilantrieb nicht ausgeglichen werden können. Dies führt dazu, dass sich der Motor im Gehäuse der Ventileinheit ohne eine mittelbare Befestigung im Ventil durch wechselnde Belastungsarten (Druck/Zug) bei jedem Lastwechsel abwechselnd im Deckel und danach im Gehäuse abstützen muss. Dies macht eine präzise Regelung sehr schwierig. Die Toleranzen können zum Beispiel Fertigungstoleranzen sein, da das Gehäuse und der Deckel vorzugsweise aus Kunststoff bestehen und beispielsweise durch ein Spritzgussverfahren hergestellt werden. Zudem soll das Ventil bei Einsatztemperaturen von bis zu 180 °C verwendet werden. Bei diesen hohen Einsatztemperaturen sind die Kunststoffteile kriechbehaftet, d. h. ihre Abmessungen können sich ändern. Dadurch ändern sich auch die Abstände zwischen dem Gehäuse bzw. Deckel und dem Ventilantrieb. Andererseits ist eine Befestigung des Ventilantriebs am Gehäuse über eine Verschraubung teuer und aufwendig.

Die vorliegende Erfindung bietet eine Lösung, die gängige Befestigungsmethode mittels Verschraubung am Halter zu umgehen.

Es ist daher Aufgabe der Erfindung, eine kostengünstige Ventileinheit bereitzustellen, bei der Toleranzen aus der Herstellung und Ausdehnungen aufgrund von hohen Temperaturen ausgeglichen werden.

Die Aufgabe wird durch den Gegenstand des unabhängigen Patentanspruchs 1 gelöst. Weitere Ausgestaltungen finden sich in den abhängigen Patentansprüchen. Die im Hinblick auf die nachfolgend beschriebene Ventileinheit aufgeführten Vorteile und bevorzugten Ausgestaltungen sind sinngemäß auf das Verfahren zur Herstellung der Ventileinheit zu übertragen und umgekehrt.

Erfindungsgemäß wird eine Ventileinheit bereitgestellt, die ein Gehäuse mit einem Deckel umfasst. In dem Gehäuse ist ein Ventilantrieb untergebracht, der mit einer Ventilspindel verbunden ist. An einem zum Ventilantrieb entgegengesetzten Ende der Ventilspindel ist ein Schließkörper angeordnet.

Die Ventilspindel ist selbsthemmenden ausgeführt, sodass die Zustände Offen und Geschlossen gehalten werden.

Durch eine derartige Ausgestaltung der Ventileinheit kann die Unterbringung eines Ventilantriebst in einem Gehäuse vereinfacht werden. Weiterhin werden durch die Vorspannung des Ventilantriebs durch das elastische Element Toleranzen, beispielsweise die Herstellungstoleranzen des Gehäuses, aber auch Ausdehnungen der Materialien aufgrund der Temperatur, ausgeglichen. Dadurch, dass im Betrieb der Ventileinheit der Ventilantrieb die Ventilspindel mit dem Schließkörper in Axialrichtung der Ventilspindel antreibt, würde sich der Ventilantrieb ohne Vorspannung durch ein elastisches Element im Gehäuse bewegen. Dies würde die Genauigkeit der Ventileinheit verringern. Da in der erfindungsgemäßen Ventileinheit der Ventilantrieb durch ein elastisches Element gegen den Deckel vorgespannt ist, findet beim Wechsel zwischen einem Schließen und Öffnen der Ventileinheit keine Bewegung des Ventilantriebs im Gehäuse statt, da die Herstellungstoleranzen zwischen dem Inneren des Gehäuses und dem Ventilantrieb ausgeglichen werden.

Die Anordnung ist dabei so gewählt, dass beim Schließen der Ventileinheit die resultierende Kraft den Antrieb stärker gegen den Deckel drückt. Dadurch wirkt die Kraft in die gleiche Richtung wie das elastische Element, d. h. die Lage des Antriebs bleibt gleich.

Beispielsweise handelt es sich bei dem Ventilantrieb um einen elektrischen Antrieb, insbesondere einen elektrischen Schrittmotor oder einen elektrischen Linearmotor. Abhängig von der gewünschten Anwendung kann dabei der bevorzugte Motor verbaut werden.

In einer Ausführungsform wird der Deckel mittels eines oder mehreren Rasthaken am Gehäuse befestigt. Die Rasthaken sind entlang der Umfangsrichtung am Deckel verteilt, wobei die Abstände zwischen den Rasthaken gleichmäßig oder ungleichmäßig sein können. Dadurch kann die Herstellung der Ventileinheit vereinfacht werden, da ein Verschrauben des Ventilantriebs an dem Deckel oder am Gehäuse nicht durchgeführt werden muss. Die Rasthaken sorgen für eine schnelle und einfach umzusetzende Verbindung zwischen dem Deckel und dem Gehäuse.

Weiterhin weist das Gehäuse in Umfangsrichtung eine oder mehrere Aussparungen auf, in die die Rasthaken eingreifen können. Durch die Verwendung von Aussparungen können der Deckel und das Gehäuse in einfacher Weise hergestellt werden.

Die eine oder die mehreren Aussparungen durchdringen vorteilhafter Weise das Gehäuse in radialer Richtung teilweise oder vollständig. Insbesondere wenn die eine oder die mehreren Aussparungen das Gehäuse vollständig durchdringen, kann die Ventileinheit in einfacher Weise wieder geöffnet werden, indem von außen gegen die Rasthaken gedrückt wird und diese dadurch aus den Aussparungen herausgelöst werden können. Somit kann der Ventilantrieb in einfacher Weise herausgenommen und gewartet oder repariert werden.

Ferner gibt es auch andere Befestigungsmöglichkeiten für den Deckel, zum Beispiel Bajonettverschlüsse, Rahmendübel, Verpressen, Kleben, usw.

Das Gehäuse und/oder der Deckel besteht z. B. aus Kunststoff. Die Verwendung von Kunststoff ist vorteilhaft, da dadurch Gewicht gespart werden kann und somit die Ventileinheit in einfacher Weise am vorgesehenen Ort befestigt werden kann. Weiterhin erleichtert die Herstellung aus Kunststoff den Herstellungsprozess des Gehäuses und/oder des Deckels.

Vorteilhafterweise ist zwischen dem Gehäuse und dem Deckel eine Dichtung angeordnet. Bei einer solchen Dichtung kann sich beispielsweise um einen Dichtring bzw. einen O-Ring handeln, der entlang des Umfangs zwischen dem Gehäuse und dem Deckel angeordnet wird. Durch eine solche Dichtung wird verhindert, dass Flüssigkeit von außen in das Gehäuse eindringen kann und den Ventilantrieb beschädigt.

In einer vorteilhaften Ausgestaltung ist an dem Gehäuse eine Ausbuchtung vorgesehen, in der ein elektronisches Bauteil, insbesondere eine Leiterplatte, aufgenommen ist. Vorteilhafterweise ist die Ausbuchtung im Bereich der Ventilspindel am Gehäuse vorgesehen. Das elektrische Bauteil sitzt derart in der Ausbuchtung, dass das elastische Element eine Bewegung des elektronischen Bauteils in axialer Richtung der Ventilspindel aus der Ausbuchtung heraus verhindert. Durch eine solche Ausbuchtung kann das darin aufgenommene elektronische Bauteil in einer Einheit mit dem Ventilantrieb verbaut werden. Das elastische Element hat folglich eine Doppelfunktion.

Optional weist das Gehäuse in seinem Inneren einen Absatz im Bereich der Ventilspindel auf, der dem Ventilantrieb gegenüberliegt und an dem sich das elastische Element abstützt. Ein solcher Absatz kann beispielsweise erzeugt werden, indem das Gehäuse im Bereich des Ventilantriebs einen größeren Außenumfang aufweist als im Bereich der Ventilspindel. Beispielsweise kann das Gehäuse eine zylindrische Form aufweisen, die im Bereich des Ventilantriebs einen größeren Durchmesser aufweist als im Bereich der Ventilspindel. Alternativ kann das Gehäuse in einer Zylinderform mit axial durchgängig gleichem Durchmesser ausgestaltet sein und im Inneren einen Vorsprung aufweisen, der den Absatz bildet. Die Form des Gehäuses muss auch nicht zwangsläufig eine Zylinderform sein, sondern kann eine beliebige Form haben.

Beispielsweise handelt es sich bei dem elastischen Element um eine Feder, insbesondere eine Spiralfeder eine Tellerfeder oder eine Wellenfeder. Eine Feder ist vorteilhaft, da ihre Beschaffung kostengünstig ist und die benötigte Vorspannung zum Ausgleich der Herstellungstoleranzen auf einen gewünschten Wert eingestellt werden kann.

In einer erfindungsgemäßen Ausführungsform ist ein zweites elastisches Element vorgesehen, welches den Motor in Richtung Schließstellung unterstützt, indem es die Ventilspindel in Richtung Schließstellung vorspannt. Das zweite elastische Element sitzt dabei zwischen dem Ventilantrieb und einem weiteren Vorsprung, der an der Ventilspindel angeordnet ist.

Die Erfindung umfasst weiterhin ein Verfahren zur Herstellung einer Ventileinheit, insbesondere einer erfindungsgemäßen Ventileinheit, mit den folgenden Schritten: Vormontieren einer Antriebsbaugruppe mit einer Ventilantrieb; Vormontieren einer Gehäusebaugruppe mit einem Gehäuse mit einer offenen Seite; Aufsetzen der Antriebsbaugruppe auf einen Deckel zum Schließen des Gehäuses, wobei ein elastisches Element beim Vormontieren oder nach dem Aufsetzen der Antriebsbaugruppe auf den Deckel auf den Ventilantrieb (4) aufgelegt wird; Aufsetzen des Gehäuses mit seiner offenen Seite voraus auf die Antriebsbaugruppe unter Kompression des elastischen Elements; Aufbringen einer Kraft, sodass das elastische Element zusammengedrückt wird und der Ventilantrieb gegen das elastische Element drückt; sowie Befestigen des Gehäuses am Deckel.

Eine Alternative hierzu sieht vor, dass zunächst das elastische Element in das Gehäuse eingelegt wird. Anschließend wird der Ventilantrieb, welcher über eine Ventilspindel mit einem Schließkörper verbunden ist, in das Gehäuse eingebracht, sodass der Ventilantrieb auf dem elastischen Element aufliegt. Darauffolgend wird die Ventileinheit mit dem Deckel durch Aufbringen einer Kraft verschlossen, wodurch das elastische Element zusammengedrückt wird und der Ventilantrieb gegen das elastische Element drückt. Durch dieses Verfahren kann eine Ventileinheit, welche Herstellungstoleranzen des Gehäuses samt Deckel und/oder Größenänderungen des Gehäuses aufgrund von Wärme ausgleicht, auf einfache Weise hergestellt.

Vor dem Aufsetzen des Gehäuses wird ein elektronisches Bauteil am Deckel befestigt wird, das nach dem Aufsetzen des Gehäuses in diesem liegt.

Beispielsweise greifen durch das Aufbringen der Kraft eine oder mehrere Rasthaken, welche in axialer Richtung vom Deckel abstehen, in eine oder mehrere Aussparungen im Gehäuse ein. Durch die Verwendung von Rasthaken kann das Gehäuse in einfacher Weise mit dem Deckel verschlossen und zur Wartung bzw. Reparatur des Ventilantriebs wieder geöffnet werden.

Es kann vor dem Verschließen der Ventileinheit mit einem Deckel eine Dichtung zwischen dem Gehäuse und dem Deckel eingebracht werden. Eine solche Dichtung, beispielsweise ein Dichtring, verhindert das Eindringen von Flüssigkeit in das Gehäuse und schützt dadurch den Ventilantrieb.

Weitere Merkmale und Vorteile der Erfindung sind in den nachfolgenden Zeichnungen enthalten. In diesen zeigen:
Figur 1 eine erste Ausführungsform der erfindungsgemäßen Ventileinheit,
Figur 2 eine weitere Ausführungsform der erfindungsgemäßen Ventileinheit mit zwei elastischen Elementen,
Figur 3A einen ersten Schritt eines erfindungsgemäßen Verfahrens zur Herstellung einer erfindungsgemäßen Ventileinheit, und
Figur 3B einen zweiten Schritt des Verfahrens zur Herstellung einer erfindungsgemäßen Ventileinheit.

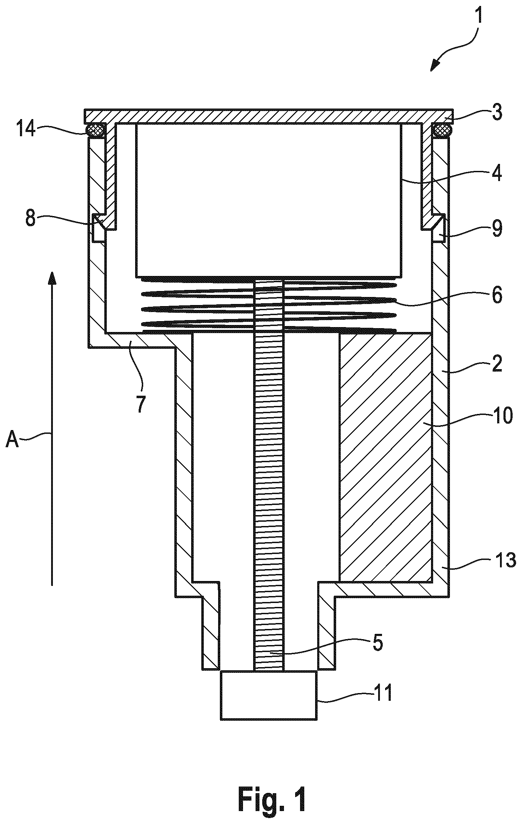

Figur 1 zeigt eine Ventileinheit 1 mit einem Gehäuse 2 mit einem Deckel 3 in einem geschlossenen Zustand. In dem Gehäuse 2 befindet sich ein Ventilantrieb 4, der mit einer Ventilspindel 5 verbunden ist.

Die Axialricht**ung der Ventilspindel 5 wird in den Figuren mit einem mit "A"** gekennzeichneten Pfeil angezeigt.

An dem, dem Ventilantrieb 4 entgegengesetzten Ende der Ventilspindel 5 ist ein Schließkörper 11 angebracht. Dieser Schließkörper 11 dient dazu, eine Leitung, in der beispielsweise eine Flüssigkeit oder ein Gas transportiert wird, zu verschließen bzw. zu öffnen.

Im Inneren des Gehäuses 2 ist ein Absatz 7 vorgesehen, der beabstandet vom Antrieb 4 im Bereich der Ventilspindel 5 liegt.

Zwischen einer dem Schließkörper 11 abgewandten Seite des Absatzes 7 und dem Ventilantrieb 4 ist ein elastisches Element 6 angeordnet. Diese abgewandte Seite bildet eine Anlage für das elastische Element 6. Bei dem elastischen Element 6 kann sich beispielsweise um eine Feder, insbesondere eine Spiralfeder, Tellerfeder oder Wellenfeder handeln. Das in Figur 1 gezeigte Gehäuse 2 hat im Bereich des Ventilantriebs 4 eine Kreiszylinderform mit einem oberhalb des Absatzes 7 größeren Durchmesser als im Bereich der Ventilspindel 5.

Weiterhin ist die Figur 1 zu sehen, dass das Gehäuse 2 der Ventileinheit 1 im Bereich der selbsthemmend gelagerten Ventilspindel 5 eine Ausbuchtung 13 aufweist, in der ein elektronisches Bauteil 10, insbesondere eine Leiterplatte, angeordnet ist. Abgesehen von der Ausbuchtung 13 hat das Gehäuse auch in diesem Bereich eine Kreiszylinderform. Dabei sind das elektronische Bauteil 10 und die Ausbuchtung 13 so am Gehäuse 2 angeordnet, dass das elastische Element 6 bei einer Bewegung des elektronischen Bauteils 10 in Axialrichtung A nicht aus der Ausbuchtung 13 herausrutschen kann. Dabei steht das elastische Element 6 allerdings in der Montagestellung nicht in direktem Kontakt mit dem elektronischen Bauteils 10 und presst dieses in die Ausbuchtung hinein, sondern es besteht ein kleiner Abstand zwischen dem elektronischen Bauteil 10 und dem elastischen Element 6. Nur bei Bewegung des elektronischen Bauteils 10 in Axialrichtung A wirkt das elastische Element 6 als Sicherung.

Alternativ kann das Gehäuse 2 eine andere beliebige Form haben. In einem solchen Fall kann das Gehäuse 2 im Übergangsbereich vom Ventilantrieb 4 zur Ventilspindel 5 ein Vorsprung im Gehäuse 2 haben, auf dem das elastische Element 6 aufliegt.

In einem geschlossenen Zustand der Ventileinheit 1 spannt das elastische Element 6 den Ventilantrieb 4 in Richtung des Deckels 3 vor.

Am Deckel 3 sind ein oder mehrere Rasthaken 8 vorhanden. Dieser bzw. diese Rasthaken 8 ragen im geschlossenen Zustand der Ventileinheit 1 in Axialrichtung A vom Deckel 3 ab und greifen in eine oder mehrere im Gehäuse 2 vorgesehene Aussparungen 9 ein. Die eine oder die mehreren Aussparungen 9 können das Gehäuse 2 in radialer Richtung teilweise oder vollständig durchdringen. Wenn beispielsweise die Aussparungen 9 das Gehäuse vollständig durchdringen, können die Rasthaken 8 von außen mit Druck belegt werden und so aus den Aussparungen 9 herausgedrückt werden, wodurch der Deckel 3 vom Gehäuse 2 getrennt werden kann.

Weiterhin ist in Figur 1 eine Dichtung 14, beispielsweise ein Dichtring bzw. ein O-Ring, zwischen dem Deckel 3 und dem Gehäuse 2 geklemmt. Indem beim Einsetzen des Deckels 3 in das Gehäuse 2 eine Kraft aufgewendet werden muss, sodass die Rasthaken 8 in die Aussparungen 9 eingreifen, wird die Dichtung 14 zusammengedrückt und dichtet das Innere des Gehäuses 2 vor dem Eindringen von beispielsweise Flüssigkeiten ab.

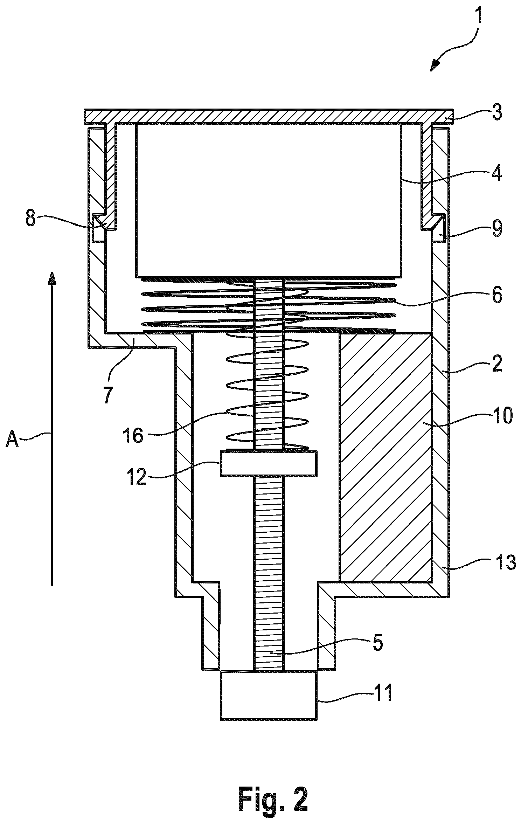

In Figur 2 ist eine weitere Ausführungsform der erfindungsgemäßen Ventileinheit 1 gezeigt. Die Bezugszeichen und Elemente der Ventileinheit 1 in Figur 2 sind dieselben wie in Figur 1. Daher werden diese nicht nochmals beschrieben und es wird auf die Beschreibung der Figur 1 verwiesen. Die Ventileinheit 1 in Figur 2 weist an der Ventilspindel 5 einen Vorsprung 12 auf, auf dem ein zweites elastisches Element 16 aufliegen kann. Das zweite elastische Element 16 bewegt die Ventilspindel 5 und den damit verbundenen Schließkörper 11 beim stromlosen Antrieb in Richtung einer Schließstellung.

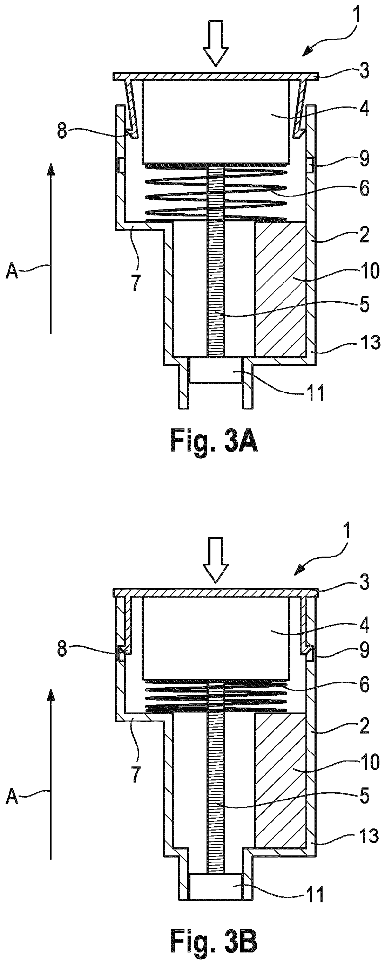

In den Figuren 3A und 3B sind verschiedene Schritte während des Verfahrens zur Herstellung einer Ventileinheit 1, insbesondere eine Ventileinheit 1, wie sie in Zusammenhang mit den Figuren 1 und 2 beschrieben ist, gezeigt. Figur 3A zeigt eine Ventileinheit 1 im noch offenen Zustand.

Die Ventileinheit 1 wird auf dem Kopf stehend montiert. Zuerst wird eine Antriebsbaugruppe mit dem Ventilantrieb 4, der Ventilspindel 5 und dem Schließkörper 11 vormontiert. Parallel dazu wird eine sogenannte Gehäusebaugruppe ebenfalls vormontiert. Zu dieser gehören unter anderem das Gehäuse 2, eventuelle Dichtungen und dergleichen.

Die Antriebsbaugruppe wird mit dem nach unten positionierten Ventilantrieb 4 auf den Deckel 3 aufgesetzt, wobei der Deckel 3 mit den Rasthaken 8 nach oben ragend auf einem Montagetisch liegt. Das elastische Element 6 ist diesem Zeitpunkt auch bereits montiert. Anschließend wird das elektronische Bauteil 10 in den Deckel 3 eingesetzt, wobei hier der Deckel Haltevorsprünge haben kann, welche die Positionierung des elektronischen Bauteils 10 ermöglicht.

Im letzten Schritt wird dann das Gehäuse 2 mit seiner offenen Seite nach unten ragend aufgesetzt, d.h. auf die vorher zusammen montierten Teile aufgestülpt. Dabei rasten die Rasthaken 8 in die Ausnehmungen 9.Nachdem die Rasthaken 8 in die Aussparungen 9 eingreifen, wird die Kraft nicht länger auf den Deckel 3 aufgebracht. Dadurch drückt das elastische Element 6 den Ventilantrieb 4 in Axialrichtung A der Ventilspindel 5 gegen den Deckel 3.

Auch wenn in den Figuren 3A und 3B lediglich eine Ventileinheit 1 gemäß der Figur 1 gezeigt ist, kann das Verfahren zur Herstellung einer Ventileinheit 1 auch für eine Ventileinheit 1 nach Figur 2 mit einem Vorsprung 12 und einem zweiten elastischen Element 16 verwendet werden.

## Patentansprüche

1. Ventileinheit (1) umfassend ein Gehäuse (2) mit einem Deckel (3), einen Ventilantrieb (4), der mit einer Ventilspindel (5) verbunden ist, einen Schließkörper (11), der am dem Ventilantrieb (4) entgegengesetzten Ende der Ventilspindel (5) angeordnet ist, und ein elastisches Element (6), das zwischen einer dem Schließkörper (11) abgewandten Anlage im Gehäuse (2) und dem Ventilantrieb (4) angeordnet ist; wobei das elastische Element (6) den Ventilantrieb (4) in einem geschlossenen Zustand der Ventileinheit (1) in Richtung des Deckels (3) vorspannt.

2. Ventileinheit (1) nach Anspruch 1, wobei der Ventilantrieb (4) ein elektrischer Antrieb, insbesondere ein elektrischer Schrittmotor oder ein elektrischer Linearmotor, ist.

3. Ventileinheit (1) nach einem der vorhergehenden Ansprüche, wobei der Deckel (3) mittels eines oder mehrerer Rasthaken (8) am Gehäuse (2) befestigt ist.

4. Ventileinheit (1) nach Anspruch 3, wobei das Gehäuse (2) in Umfangsrichtung eine oder mehrere Aussparungen (9) aufweist, in die die Rasthaken (8) eingreifen können.

5. Ventileinheit (1) nach Anspruch 4, wobei die eine oder die mehreren Aussparungen (9) das Gehäuse (2) in radialer Richtung teilweise oder vollständig durchdringen.

6. Ventileinheit (1) nach einem der vorherigen Ansprüche, wobei das Gehäuse (2) und/oder der Deckel (3) aus Kunststoff bestehen.

7. Ventileinheit (1) nach einem der vorherigen Ansprüche, wobei zwischen dem Gehäuse (2) und dem Deckel (3) eine Dichtung (14) angeordnet ist.

8. Ventileinheit (1) nach einem der vorhergehenden Ansprüche, wobei an dem Gehäuse (2) eine Ausbuchtung (13) vorgesehen ist, in der ein elektronisches Bauteil (10), insbesondere eine Leiterplatte, aufgenommen ist.

9. Ventileinheit (1) nach Anspruch 8, wobei die Ausbuchtung (13) im Bereich der Ventilspindel (5) am Gehäuse (2) vorgesehen ist.

10. Ventileinheit (1) nach Anspruch 8 oder 9, wobei die Ausbuchtung so am Gehäuse (2) angeordnet und das elektronische Bauteil (10) so in der Ausbuchtung (13) sitzt, dass das elastische Element (6) eine Bewegung des elektronischen Bauteils (10) in Axialrichtung der Ventilspindel (5) aus der Ausbuchtung (13) heraus verhindert.

11. Ventileinheit (1) nach einem der vorhergehenden Ansprüche, wobei das Gehäuse (2) in seinem Inneren einen Absatz (7) im Bereich der Ventilspindel (5) aufweist, der dem Ventilantrieb (4) gegenüberliegt und an dem sich das elastische Element (6) abstützt.

12. Ventileinheit (1) nach einem der vorhergehenden Ansprüche, wobei das elastische Element (6) eine Feder, insbesondere eine Spiralfeder, eine Tellerfeder oder eine Wellenfeder ist.

13. Ventileinheit (1) nach einem der vorhergehenden Ansprüche, wobei ein zweites elastisches Element (16) vorgesehen ist, welches die Ventilspindel (5) bei stromlosem Antrieb in Richtung einer Schließposition vorspannt.

14. Verfahren zur Herstellung einer Ventileinheit (1), insbesondere einer Ventileinheit (1) nach einem der vorhergehenden Ansprüche, wobei das Verfahren die folgenden Schritte umfasst: Vormontieren einer Antriebsbaugruppe mit einer Ventilantrieb (4); Vormontieren einer Gehäusebaugruppe mit einem Gehäuse (2) mit einer offenen Seite; Aufsetzen der Antriebsbaugruppe auf einen Deckel (3) zum Schließen des Gehäuses (2), wobei ein elastisches Element (6) beim Vormontieren oder nach dem Aufsetzen der Antriebsbaugruppe auf den Deckel (3) auf den Ventilantrieb (4) aufgelegt wird; Aufsetzen des Gehäuses (2) mit seiner offenen Seite voraus auf die Antriebsbaugruppe unter Kompression des elastischen Elements (6); Aufbringen einer Kraft, sodass das elastische Element (6) zusammengedrückt wird und der Ventilantrieb (4) gegen das elastische Element (6) drückt; sowie Befestigen des Gehäuses (2) am Deckel (3).

15. Verfahren zur Herstellung einer Ventileinheit (1) nach Anspruch 14, wobei vor dem Aufsetzen des Gehäuses (2) ein elektronisches Bauteil (10) am Deckel (3) befestigt wird, das nach dem Aufsetzen des Gehäuses (2) in diesem liegt.

16. Verfahren zur Herstellung einer Ventileinheit (1) nach einem der Ansprüche 14 und 15, wobei durch das Aufbringen der Kraft ein oder mehrere Rasthaken (8), welche in Axialrichtung vom Deckel (3) abstehen, in eine oder mehrere Aussparungen (9) im Gehäuse (2) eingreifen.
